# EUROPÄISCHE PATENTSCHRIFT

(11) **EP 2 144 546 B1**
(45) Veröffentlichungstag und Bekanntmachung des Hinweises auf die Patenterteilung: **25.08.2010**
(21) Anmeldenummer: 08735026.0
(22) Anmeldetag: 04.04.2008
(51) Int. Cl.: A47J 39/00

(54) **TRANSPORTWAGEN FÜR FERTIGGERICHTE**
TROLLEY FOR READY-TO-EAT MEALS
CHARIOT TRANSPORTEUR POUR PLATS PRÉPARÉS

(30) Priorität: 04.04.2007 DE 202007005036 U
(43) Veröffentlichungstag der Anmeldung: 20.01.2010
(73) Patentinhaber: Kiersch Composite GmbH, 22880 Wedel (DE)
(72) Erfinder: KIERSCH, Walter, 22880 Wedel (DE)
(74) Vertreter: Glawe, Delfs, Moll
(86) Internationale Anmeldenummer: PCT/EP2008/002697
(87) Internationale Veröffentlichungsnummer: WO 2008/122413

(56) Entgegenhaltungen:
- WO-A-02/06742
- US-A1- 2004 207 168

## Beschreibung

Die Erfindung betrifft einen Transportwagen für Fertiggerichte mit einem Gehäuse und mit Schienen zum Einsetzen von Fertiggerichte enthaltenden Behältern oder Tabletts, mit Kühlelementen zum Kühlen von Speisen und/oder mit Heizelementen zum Wärmen von Speisen.

Mit Transportwagen dieser Art werden Fertiggerichte zum Konsumenten befördert. Die Fertiggerichte müssen dabei einerseits warm gehalten werden, während andererseits Speisen wie z. B. Salate und Desserts kühl gehalten werden müssen. Die bekannten Transportwagen weisen dabei Türen auf, in die die Behälter oder Tabletts mit den Speisen hineingeschoben oder entnommen werden können. Dies muss selbstverständlich von der Seite her erfolgen, da man von oben her nur jeweils das oberste Tablett entnehmen könnte. Da im Gegensatz zu Tiefkühltruhen in Lebensmittelmärkten der Behälter nicht oben offen ist, sondern an der Seite, wenn Speisen eingesetzt oder entnommen werden sollen, "fällt die Kälte heraus", d. h. die kalte Luft strömt heraus. Dadurch wird die Abkühlung oder Kühlhaltung der Speisen unterbrochen. Ebenso steigt Wärme nach oben, wenn die Türen geöffnet werden, so dass sich die warm zu haltenden Lebensmittel abkühlen. Die Kältespeicherfähigkeit bzw. Wärmespeicherfähigkeit der Kühlelemente und Heizelemente, die nun die Speisen nach Schließen der Türen neu kühlen bzw. wärmen müssen, ist bald erschöpft, so dass die Speisen nicht mehr richtig kalt bzw. warm gehalten werden können.

Die Aufgabe der Erfindung besteht in der Schaffung eines Transportwagens der eingangs genannten Art, mit dem Speisen länger kühl bzw. warm gehalten werden können.

Die erfindungsgemäße Lösung besteht darin, dass das Gehäuse eine eine untere oben offene Halbschale und/oder eine obere, unten offene Halbschale aufweist, die in einem fahrbaren Gestell in vertikaler Richtung verschiebbar ist/sind. Ist nur eine Halbschale vorgesehen, so kann die untere Halbschale nach oben gegen eine obere Abdeckung bewegt werden, oder die obere Halbschale kann gegen eine untere Abdeckung bewegt werden. Sind zwei Halbschalen vorgesehen, so können die untere und die obere Halbschale dabei aufeinander zu bewegt werden. In beiden Fällen erhält man so ein geschlossenes Gehäuse. Sollen Speisen eingesetzt oder entnommen werden, wird die obere Halbschale nach oben und/oder die untere Halbschale nach unten bewegt, so dass die Schienen zum Einsetzen der Fertiggerichte freigelegt werden. Es können dann Fertiggerichte in den Behältern oder Tabletts eingesetzt oder entnommen werden. Die warme Luft steigt nach oben, bleibt also in der oberen Halbschale gefangen. Gleichermaßen wird die kalte Luft der unteren Halbschale nach unten fallen und bleibt ebenfalls in der unteren Halbschale gefangen. Es dringt daher nur verhältnismäßig wenig Warmluft und verhältnismäßig wenig Kaltluft nach außen.

Zweckmäßigerweise ist im Falle eines Transportwagens mit zwei Halbschalen im mittleren Höhenbereich des Transportwagens eine isolierende Trennplatte vorgesehen. Dadurch wird auch bei nur teilweise gefülltem Transportwagen sichergestellt, dass keine Mischung der kalten Luft im unteren Bereich mit der warmen Luft im oberen Bereich stattfindet. Unbedingt erforderlich sind solche Trennplatten aber nicht, da die kalte Luft nach unten fällt und die warme Luft nach oben steigt.

Vorteilhafterweise sind dabei die Halbschalen an Seilen aufgehängt, deren eines Ende mit der unteren Halbschale und deren anderes Ende mit der oberen Halbschale verbunden ist und die im oberen Teil des Gestells über eine Umlenkung geführt sind. Solche Seile mit Umlenkrollen sind an allen vier Ecken des Transportwagens vorgesehen. Bewegt man die untere Halbschale nach unten, so bewegt sich automatisch die obere Halbschale nach oben. Bewegt man die obere Halbschale nach oben, bewegt sich die untere Halbschale nach unten. Man braucht daher nur eine Halbschale zu bewegen, um den Transportwagen zu öffnen, damit man Speisen einsetzen oder entnehmen kann.

Bekannte Transportwagen weisen ein doppelschaliges Gehäuse auf, bei dem zwischen der äußeren und der inneren Schale Steinwolle zur Isolierung angebracht ist. Diese Transportwagen haben einerseits den Nachteil, dass sie sehr schwer sind, typischerweise eine Masse von 250 kg haben. Ein weiterer ganz wesentlicher Nachteil besteht aber darin, dass bei der für Lebensmitteltransportwagen erforderlichen Sterilisierung Wasser in die Steinwolle eindringt und sich dort Bakterien bilden können.

Bei einer vorteilhaften Ausführungsform ist daher vorgesehen, dass die Halbschalen aus Verbundplatten mit eingebetteten Kohlefasern bestehen, die mit abgedichteten Eckverbindungen versehen sind. Solche Verbundplatten sind in anderem Zusammenhang bekannt geworden (DE 10 2004 060 169 A1). Sie haben einerseits den Vorteil gegenüber den herkömmlichen doppelschaligen Gehäusen mit Steinwollefüllung, dass sie wesentlich leichter sind. Andererseits ist aufgrund der abgedichteten Eckeverbindungen, die leicht herzustellen sind, sichergestellt, dass keine Feuchtigkeit eindringen kann. Diese Verbundplatten sind in der genannten Schrift im Einzelnen beschrieben, die hiermit auch zum Gegenstand der Offenbarung der vorliegenden Anmeldung gemacht wird.

Andere vorteilhafte Ausführungsformen zeichnen sich dadurch aus, dass die Halbschalen durch Formen aus einem gut isolierenden Material hergestellt werden. Dies kann z.B. durch Spritzguss oder Faserspritzen bewirkt werden. Dies verringert die Herstellungskosten. Auch Handlaminate sind sehr gut geeignet. Metallische Systeme haben den Vorteil besonders großer Haltbarkeit und Stabilität, erfordern aber selbstverständlich geeignete Isolierungsmaßnahmen.

Vorteilhafterweise weist der Transportwagen mit Feststelleinrichtungen versehene Räder auf, damit der Transportwagen sich während der Befüllung mit Speisen oder bei der Entnahme von Speisen oder auch sonst nicht bewegen kann, wenn eine solche Bewegung unerwünscht ist.

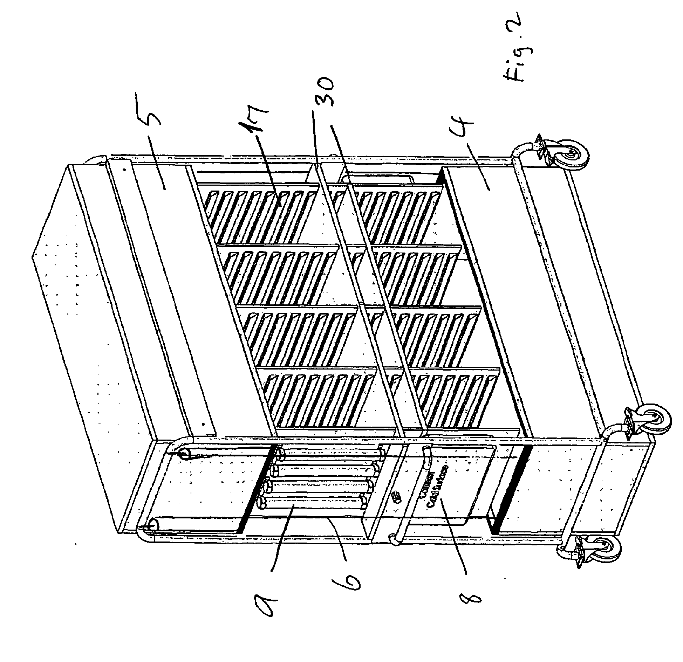

Die Wärme- oder Heizelemente können Wärmespeicherelemente sein, die bei einer besonders vorteilhaften Ausführungsform mit Heizdrähten oder -platten versehenen sind, die mit der 12 V oder 24 V Stromversorgung des anliefernden Kraftfahrzeugs betreibbar sind. Insbesondere können sie dabei aus Verbundkohlefasern bestehen, die zur Verringerung des Übergangswiderstands mit schräg angeschnittenen Endflächen versehen sind (DE 10 2004 060 169 A1). Sie sind dabei insbesondere Rohre, die über konische Muffen kontaktiert sind und durch in Fig. 2 gezeigte Clpis gehalten sind.

Bei einer vorteilhaften Ausführungsform ist anstelle der Wärme- oder Heizelemente oder zusätzlich zu diesen Wärme- oder Heizelementen vorgesehen, dass die Tabletts mit den Speisen einzeln beheizt werden. Dazu sind entsprechende Heizelemente in den Tabletts vorgesehen, die sich entweder über das ganze Tablett erstrecken oder nur über einen Teil, wenn nur ein Teil der Speisen erwärmt werden soll. Die Tabletts sind dabei an den Seiten mit Kontakten versehen, die beim Auflegen der Tabletts auf die Schienen mit dort angeordneten Kontakten in.Berührung kommen. Die Heizelemente können dabei metallische Drähte oder Kohlefasern sein. Die Kontakte in den Schienen können dabei selektiv angesteuert werden, so dass die Heizung selektiv erfolgen kann.

Die Erfindung wird im Folgenden anhand einer vorteilhaften Ausführungsform bspw. beschrieben. Es zeigen:
- Fig. 1: eine Ausführungsform eines erfindungsgemäßen Transportwagen im geschlossenen Zustand;
- Fig. 2: den Transportwagen der Erfindung von Fig. 1 im geöffneten Zustand;
- Fig. 3: einen vergrößerten Schnitt durch eine mehrschich- tige Verbundplatte, die beim Transportwagen der Fig. 1 und 2 verwendet werden kann;
- Fig. 4: ein Bauteil wie in Fig. 3 mit einer anderen Ver- bindungstechnik;
- Fig. 5: ein Bauteil wie in Fig. 1 mit noch einer anderen Verbindungstechnik; und
- Fig. 6: ein Bauteil wie in Fig. 6, jedoch mit einer be- heizbaren CFK-Schicht.

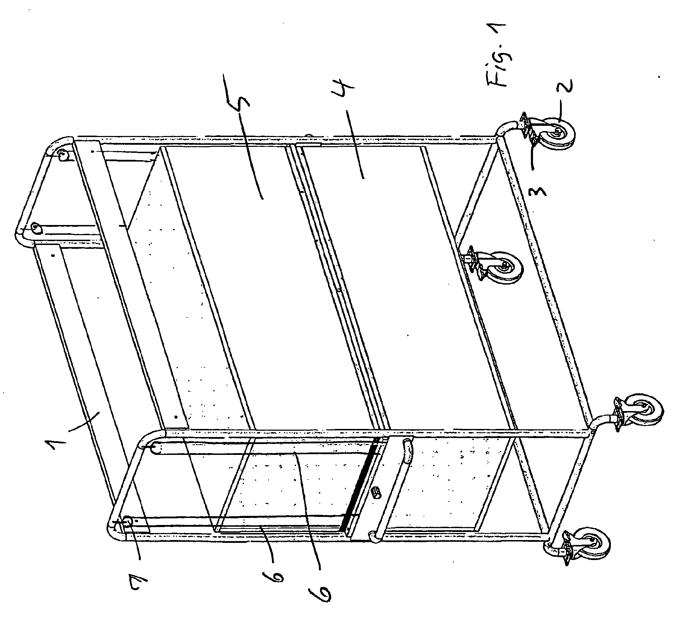

Figur 1 zeigt einen erfindungsgemäßen Transportwagen mit einer unteren Halbschale und einer oberen Halbschale im geschlossenen Zustand. Ein Gestell 1 weist Räder 2 mit Feststelleinrichtungen 3 auf. Im Gestell 1 sind eine untere oben offene Halbschale 4 und eine obere unten offene Halbschale 5 in vertikaler Richtung verschiebbar angebracht. Beide Halbschalen sind mit einem Seil 6 verbunden, das über eine oben am Gestell 1 angebrachte Umlenkrolle 7 geführt ist. Solche Seile 6 und Umlenkrollen 7 sind an allen vier Ecken des Transportwagens angeordnet.

Wie dies in Figur 2 deutlicher ersichtlich ist, ist das eine Ende der Seile 6 an der unteren Halbschale 4 und das untere an der oberen Halbschale 5 befestigt. Bewegt man daher die obere Halbschale 5 nach oben, bewegt sich die untere Halbschale 4 nach unten. Dadurch werden bei der in Figur 2 gezeigten Stellung Schienen 17 zum Einsetzen von Behältern oder Tabletts für die Speisen, Kühlkörper 8 und Wärmekörper 9 sichtbar, die die Speisen kühlen bzw. wärmen. Bei 30 sind noch isolierende Trennplatten gezeigt, die den oberen erwärmbaren Teil vom unteren kühlbaren Teil des Transportwagens abgrenzen.

Statt zweier Halbschalen kann der Transportwagen auch nur eine Halbschale aufweisen, wenn der Transportwagen nur zum Transport von warmen oder gekühlten Speisen verwendet werden soll. In diesem Falle wird die zweite Halbschale der vorgenannten Ausführungsform durch eine Abdeckung ersetzt. Die Halbschale des Transportwagens kann dabei in ähnlicher Weise wie bei der vorgenannten Ausführungsform mithilfe von Seilen aufgehängt sein, an denen Gegengewichte angebracht sind. Erforderlich ist diese Aufhängung an Seilen aber nicht.

Das Gehäuse wird zweckmäßigerweise aus Verbundplatten mit eingebetteten Kohlefasern hergestellt.

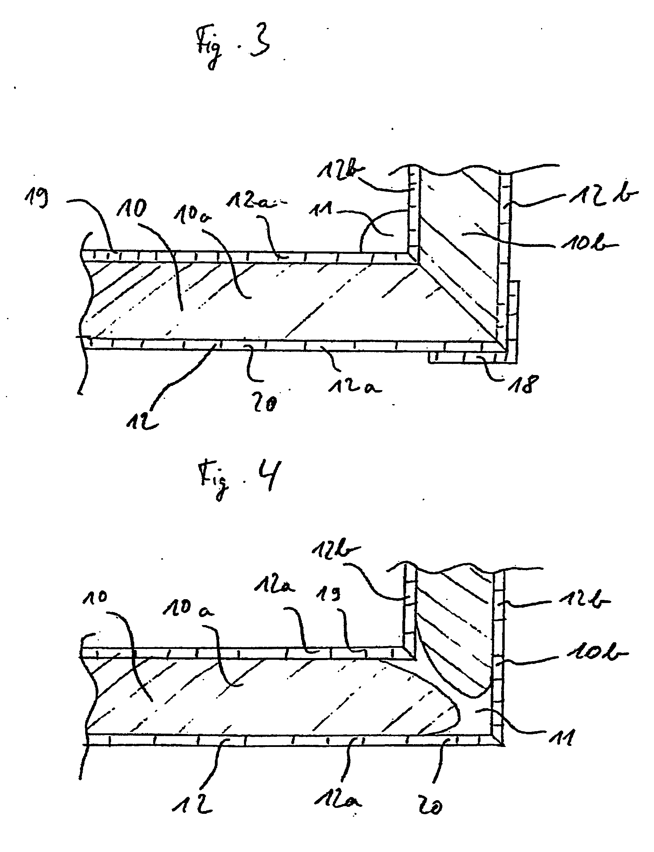

Einen Ausschnitt aus einem solchen in Sandwich-Bauweise hergestellten Bauteil zeigt Fig. 3. Das Trägermaterial 10 ist mit CFK-Schichten 12 belegt. Verschiedene Teilstücke 10a, 10b des mit CFK-Schichten 12a, 12b belegten Trägermaterials 10 können zum Herstellen des Bauteils miteinander verklebt sein. Entscheidend beim Verkleben ist es, dass die CFK-Schichten 12a fest mit den CFK-Schichten 12b verbunden wird, da die CFK-Schichten 12a, 12b die Stabilität des Bauteils erzeugen. Soll aus den Teilstücken 10a, 10b eine Verbindung über Eck hergestellt werden, können die CFK-Schichten 12a, 12b auf der Innenecke direkt mit einem Klebstoff 11 verklebt werden, während an der Außenecke eine zusätzliche CFK-Schicht 18 aufgebracht wird, die mit beiden CFK-Schichten 12a, 12b verklebt wird.

Sollen die Teilstücke 10a, 10b verbunden werden, ohne dass weitere Schichten auf der Oberfläche hinzugefügt werden, kann die Verbindung auch auf die in Fig. 4 gezeigte Art hergestellt werden. An der Verbindungsstelle wird ein Teil des Trägermaterials 10 weggefräst, so dass die CFK-Schichten 12a, 12b aneinandergrenzen und einen Hohlraum zwischen sich einschließen. Dieser Hohlraum wird mit Klebstoff 11 gefüllt. Es ist darauf zu achten, dass der Klebstoff 11 auf ausreichend großen Flächen sowohl mit der CFK-Schicht 12a als auch mit der CFK-Schicht 12b Kontakt hat.

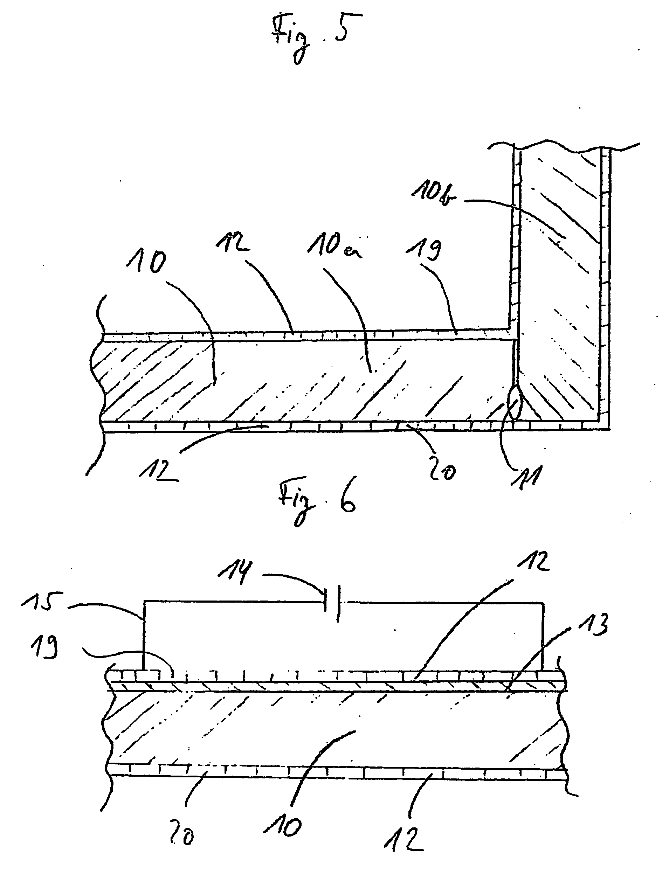

Bei einem anderen, in Fig. 5 angedeuteten Herstellungsverfahren wird die die Form des Bauteils zunächst alleine aus dem Trägermaterial 10 erzeugt. Gegebenenfalls können dazu verschiedene Teilstücke 10a, 10b des Trägermaterials 10 mit Hilfe von Klebstoff 11 miteinander verbunden sein. Wenn eine Oberfläche 19 des Bauteils im späteren Betrieb hohen Temperaturen ausgesetzt wird, kann der Klebstoff 11 so aufgebracht sein, dass er nur einen Teil der Fugenfläche bedeckt und einen Abstand zu dieser Oberfläche 19 einhält. Wird das Bauteil später insgesamt hohen Temperaturen ausgesetzt, so kann der Klebstoff 11 auch einen Abstand zu allen Oberflächen einhalten.

Wenn das Bauteil aus dem Trägermaterial fertig hergestellt ist, werden seine Oberflächen mit über die Grenzen zwischen den Teilstücken 10a, 10b hinweg zusammenhängenden CFK-Schichten 12 belegt. Die CFK-Schichten 12 geben dem Bauteil seine Stabilität und sorgen dafür, dass eine Wärmeausdehnung nicht stattfindet.

Auch der Klebstoff 11 aus Fig. 4 kann so aufgebracht werden, dass er mit nur einer der Oberflächen direkten Kontakt hat.

Die CFK-Schichten 12 sind so gestaltet, dass keine Verbindungen zwischen der CFK-Schicht auf der einen Oberfläche 19 und CFK-Schicht auf der anderen Oberfläche 20 besteht. Dadurch gibt es zwischen den beiden Seiten keine Schall- und keine Wärmebrücken, sodass der Schall- und Wärmeübertrag von der einen auf die andere Seite minimiert wird.

Statt der Wärmeelemente 9 kann im oberen Teil, wenn eine Stromquelle zur Verfügung steht, auch vorgesehen werden, die Verbundplatten zu heizen. Zum Beheizen der CFK-Schicht 12 kann diese, wie in Fig. 6 gezeigt, über Kabel 15 mit einer Spannungsquelle 14 verbunden. Der Strom fließt durch die CFK-Schicht und erwärmt diese. Mittels einer Isolierschicht 13 ist die CFK-Schicht 12 elektrisch gegenüber der Trägerschicht 10 isoliert. Durch die Beheizung kann bspw. Kondensation auf der Oberfläche der CFK-Schicht 12 verhindert werden. Auch die Wärmeelemente können aus beheizbaren Verbundelementen, insbesondere röhrenförmigen bestehen, die über Schrägflächen und konische Anschlussmuffen mir der 12 V oder 24 V Spannung des liefernden Kraftfahrzeugs beheizt werden können.

## Patentansprüche

1. Transportwagen für Fertiggerichte mit einem Gehäuse und mit Schienen zum Einsetzen von Fertiggerichte enthaltenden Behältern oder Tabletts, mit Kühlelementen zum Kühlen von Speisen und/oder mit Heiz- oder Wärmeelementen zum Wärmen von Speisen, **dadurch gekennzeichnet, dass** das Gehäuse eine untere oben offene Halbschale (4) und/oder eine obere, unten offene Halbschale (5) aufweist, die in einem fahrbaren Gestell (1) in vertikaler Richtung verschiebbar sind.

2. Transportwagen nach Anspruch 1, **dadurch gekennzeichnet, dass** er nur eine untere Halbschale (4) aufweist, die gegen eine obere Abdeckung verschiebbar ist.

3. Transportwagen nach Anspruch 1, **dadurch gekennzeichnet, dass** er nur eine obere Halbschale (5) aufweist, die gegen eine untere Abdeckung verschiebbar ist.

4. Transportwagen nach Anspruch 1, **dadurch gekennzeichnet, dass** er zwei Halbschalen (4, 5) aufweist und dass im mittleren Höhenbereich eine isolierende Trennplatte (30) vorgesehen ist.

5. Transportwagen nach Anspruch 1 oder 4, **dadurch gekennzeichnet, dass** die Halbschalen (4, 5) an Seilen (6) aufgehängt sind, deren eines Ende mit der unteren Halbschale (4) und deren anderes Ende mit der oberen Halbschale (5) verbunden ist und die im oberen Teil des Gestells (1) über eine Umlenkrolle (7) geführt sind.

6. Transportwagen nach einem der Ansprüche 1 bis 5, **dadurch gekennzeichnet, dass** die Halbschalen aus Verbundplatten mit eingebetteten Kohlefasern bestehen, die mit abgedichteten Eckverbindungen versehen sind.

7. Transportwagen nach einem der Ansprüche 1 bis 5, **dadurch gekennzeichnet, dass** die Halbschalen durch Formen aus isolierenden Materialien hergestellt sind, insbesondere durch Spritzguss oder Faserspritzen.

8. Transportwagen nach einem der Ansprüche 1 bis 5, **dadurch gekennzeichnet, dass** die Halbschalen aus Handlaminaten bestehen.

9. Transportwagen nach einem der Ansprüche 1 bis 5, **dadurch gekennzeichnet, dass** die Halbschalen metallisch mit isolierenden Schichten ausgebildet sind.

10. Transportwagen nach einem der Ansprüche 1 und 3 bis 7, **dadurch gekennzeichnet, dass** die Wärmeelemente (9) Rohre aus Kohlenstoffverbundfasern sind, die über schräge Endflächen und konische Anschlussmuffen mit der Stromversorgung des liefernden Kraftfahrzeugs verbindbar und beheizbar sind.

11. Transportwagen nach einem der Ansprüche 1 bis 10, **dadurch gekennzeichnet, dass** er mit Feststelleinrichtungen (3) versehene Räder (2) aufweist.

12. Transportwagen nach einem der Ansprüche 1 bis 11, **dadurch gekennzeichnet, dass** die Schienen, auf denen die Tabletts anzuordnen sind, mit elektrischen Kontakten versehen sind, die mit einer Stromquelle verbunden sind.

13. Transportwagen nach Anspruch 12, **dadurch gekennzeichnet, dass** die Tabletts an ihren Seiten, mit denen sie auf die Schienen aufgelegt werden, mit Kontakten versehen sind, und dass Heizelemente in den Tabletts angeordnet sind.

## Claims

1. Trolley for ready-to-eat meals, with a housing and with rails for the insertion of containers or trays containing ready-to-eat meals, with cooling elements for cooling meals and/or with heating or warming-up elements for warming up meals, **characterized in that** the housing has a lower half shell (4) which is open at the top and/or an upper half shell (5) which is open at the bottom, said half shells being displaceable in the vertical direction in a wheeled stand (1).

2. Trolley according to Claim 1, **characterized in that** it only has a lower half shell (4) which is displaceable towards an upper cover.

3. Trolley according to Claim 1, **characterized in that** it only has an upper half shell (5) which is displaceable towards a lower cover.

4. Trolley according to Claim 1, **characterized in that** it has two half shells (4, 5), and **in that** an insulating separating plate (30) is provided in the central height region.

5. Trolley according to Claim 1 or 4, **characterized in that** the half shells (4, 5) are suspended on ropes (6), one end of which is connected to the lower half shell (4) and the other end of which is connected to the upper half shell (5) and which are guided in the upper part of the stand (1) via a return pulley (7).

6. Trolley according to one of Claims 1 to 5, **characterized in that** the half shells are composed of composite plates with embedded carbon fibres which are provided with sealed corner connections.

7. Trolley according to one of Claims 1 to 5, **characterized in that** the half shells are produced from insulating materials by moulding, in particular by injection moulding or a spray-up technique.

8. Trolley according to one of Claims 1 to 5, **characterized in that** the half shells are composed of manual laminates.

9. Trolley according to one of Claims 1 to 5, **characterized in that** the half shells are of metallic design with insulating layers.

10. Trolley according to one of Claims 1 and 3 to 7, **characterized in that** the warming-up elements (9) are tubes made of carbon composite fibres which are connectable via oblique end surfaces and conical connecting sleeves to the power supply of the delivery motor vehicle and are heatable.

11. Trolley according to one of Claims 1 to 10, **characterized in that** it has wheels (2) provided with immobilizing devices (3).

12. Trolley according to one of Claims 1 to 11, **characterized in that** the rails on which the trays are to be arranged are provided with electric contacts which are connected to a power source.

13. Trolley according to Claim 12, **characterized in that** the sides of the trays with which said trays are placed onto the rails are provided with contacts, and **in that** heating elements are arranged in the trays.

## Revendications

1. Chariot de transport pour plats préparés comprenant un carter et des rails pour l'insertion de conteneurs ou tablettes contenant des plats cuisinés, des éléments réfrigérants pour la réfrigération de plats et/ou d'éléments chauffants ou d'éléments thermiques pour le réchauffement de plats, **caractérisé en ce que** le carter présente une demi-coque (4) inférieure ouverte en haut et/ou une demi-coque (5) supérieure ouverte en bas, qui peuvent coulisser dans un bâti (1) mobile dans la direction radiale.

2. Chariot de transport selon la revendication 1, **caractérisé en ce qu'**il présente seulement une demi-coque (4) inférieure qui peut coulisser vers un revêtement supérieur.

3. Chariot de transport selon la revendication 1, **caractérisé en ce qu'**il présente seulement une demi-coque (5) supérieure qui peut coulisser vers un revêtement inférieur.

4. Chariot de transport selon la revendication 1, **caractérisé en ce qu'**il présente deux demi-coques (4, 5) et **en ce qu'**une plaque de séparation (30) isolante est prévue dans la zone de hauteur centrale.

5. Chariot de transport selon la revendication 1 ou 4, **caractérisé en ce que** les demi-coques (4, 5) sont suspendues à des câbles (6) dont l'une des extrémités est reliée à la demi-coque (4) inférieure et l'autre extrémité à la demi-coque (5) supérieure et qui sont guidées dans la partie supérieure du bâti (1) au moyen d'une poulie de déviation (7).

6. Chariot de transport selon l'une quelconque des revendications 1 à 5, **caractérisé en ce que** les demi-coques sont constituées de plaques composites avec des fibres de charbon insérées qui sont dotées d'assemblages d'angle étanchéifiés.

7. Chariot de transport selon l'une quelconque des revendications 1 à 5, **caractérisé en ce que** les demi-coques sont fabriquées par formage à base de matériaux isolants, en particulier par moulage par injection ou injection de fibre.

8. Chariot de transport selon l'une quelconque des revendications 1 à 5, **caractérisé en ce que** les demi-coques sont constituées de stratifiés manuels.

9. Chariot de transport selon l'une quelconque des revendications 1 à 5, **caractérisé en ce que** les demi-coques sont conçues métalliques avec des couches isolantes.

10. Chariot de transport selon l'une quelconque des revendications 1 et 3 jusqu'à 7, **caractérisé en ce que** les éléments thermiques (9) sont des tuyaux à base de fibres mixtes de carbone qui peuvent être reliés et chauffés au moyen de surfaces d'extrémité inclinées et coniques avec l'alimentation électrique du véhicule fournisseur.

11. Chariot de transport selon l'une quelconque des revendications 1 à 10, **caractérisé en ce qu'**il est équipé de roues (2) avec dispositifs de blocage (3).

12. Chariot de transport selon l'une quelconque des revendications 1 à 11, **caractérisé en ce que** les rails, sur lesquels les tablettes doivent être disposées, sont dotés de contacts électriques qui sont reliés à une source de courant.

13. Chariot de transport selon la revendication 12, **caractérisé en ce que** les tablettes sont dotées de contacts sur leurs côtés avec lesquels elles sont posées sur les rails et **en ce que** des éléments chauffants sont disposés dans les tablettes.
